# EUROPÄISCHE PATENTSCHRIFT

(11) **EP 1 412 403 B1**
(45) Veröffentlichungstag und Bekanntmachung des Hinweises auf die Patenterteilung: **11.04.2007**
(21) Anmeldenummer: 02762358.6
(22) Anmeldetag: 15.07.2002
(51) Int. Cl.: C08F 251/00

(54) **VERFAHREN ZUR HERSTELLUNG VON PFROPFCOPOLYMEREN AUS STÄRKE, TERT-ALKYLAZOCYANOCARBONSÄUREESTER SOWIE PFROPFCOPOLYMERE UND DEREN VERWENDUNG**
METHOD FOR THE PRODUCTION OF GRAFTED COPOLYMERS MADE OF STARCH, TERT-ALKYLAZOCYANOCARBOXYLIC ACID ESTERS AND GRAFTED COPOLYMERS AND THE USE THEREOF
PROCEDE DE PRODUCTION DE COPOLYMERES GREFFES CONSTITUES D'AMIDON, ESTERS D'ACIDE TERT-ALKYLAZOCYANOCARBOXYLIQUE ET COPOLYMERES GREFFES ET LEUR UTILISATION

(30) Priorität: 16.07.2001 DE 10134560
(43) Veröffentlichungstag der Anmeldung: 28.04.2004
(73) Patentinhaber: Fraunhofer-Gesellschaft zur Förderung der angewandten Forschung e.V., 80686 München (DE)
(72) Erfinder: BRUZZANO, Stefano, 14469 Potsdam (DE); SIEVERLING, Nathalie, 12247 Berlin (DE); JAEGER, Werner, 14532 Kleinmachnow (DE); BEGLI, Alireza Haji, 67305 Ramsen (DE)
(86) Internationale Anmeldenummer: PCT/EP2002/007829
(87) Internationale Veröffentlichungsnummer: WO 2003/008473

(56) Entgegenhaltungen:
- EP-A- 0 173 517
- EP-A- 0 530 438
- EP-A- 1 002 810
- US-A- 3 455 853

## Beschreibung

Die Erfindung betrifft ein Verfahren zur Herstellung von Pfropfcopolymeren mit einem aus Stärke und/oder deren Derivaten gebildeten Rückgrat. Die Herstellung erfolgt dabei über tert-Alkylazocyanocarbonsäureester von Stärke die durch radikalische Reaktion mit Vinylmonomeren gekoppelt werden. Ebenso betrifft die Erfindung Pfropfcopolymere von Stärke, deren Dispersionen sowie die Verwendung der Pfropfcopolymere.

Stärke ist ein vielgenutztes natürliches Polymer, das leicht und in großem Umfang gewonnen werden kann. Stärke hat in ihrer natürlichen Form zahlreiche Anwendungen sowohl im technischen Bereich als auch in der Lebensmittelindustrie gefunden. Dieses vielfältige Anwendungspotential kann durch eine Modifizierung der Stärkemoleküle erweitert und optimiert werden.

Die Modifizierung der Stärke kann z.B. durch übliche Reaktionen der organischen Chemie erfolgen. Dabei werden aber z. T. nur unbefriedigende Verbesserungen der gewünschten Anwendungseigenschaften erreicht. Eine rationelle Variante ist die Kombination von Stärkemolekülen mit synthetischen Polymeren, wobei die synthetischen Polymeren kovalent und kammartig an das Stärkemolekül als Rückgrat gebunden sind. Diese Pfropfcopolymere der Stärke sind z.B. aus G.F. Fanta et al. in : Encyclopedia of Polymer Science and Technology, Suppl. Vol. 2, 665-699 und G.F. Fanta in: Block and Graft Copolymerization, Vol. 1, 665-699 bekannt. Sie werden im allgemeinen dadurch gewonnen, dass an den Stärkemolekülen Radikale erzeugt werden, die dann die Polymerisation von Vinylmonomeren auslösen.

Die Erzeugung der Radikale kann sowohl chemisch als auch physikalisch erfolgen. Die physikalische Radikalbildung durch γ-, β- oder UV-Strahlung ist sehr unspezifisch und führt im allgemeinen zur Bildung merklicher Anteile an Homopolymer der zur Pfropfung eingesetzten Vinylmonomere. Chemisch werden die Radikale am Stärkemolekül durch Redoxreaktionen erzeugt. Als Oxidationsmittel werden häufig Cer- und Mangansalze eingesetzt. Weiterhin werden Redoxsysteme empfohlen, aus denen zunächst niedermolekulare Radikale, z.B. Hydroxylradikale entstehen. Diese übertragen ihre Radikaleigenschaft auf die Stärke. Beispiele hierfür sind Permanganate in Gegenwart von Säuren, Persulfate oder das System Wasserstoffperoxid/Eisen-II-Salz.

Auch bei diesen Verfahren der chemischen Erzeugung der Stärkeradikale werden stets z. T. erhebliche Mengen an Homopolymer gebildet, so dass auch hier ein undefiniertes Gemisch aus Pfropfcopolymer, Homopolymer und unveränderter Stärke vorliegt.

Von Nachteil ist weiterhin, dass bei Verwendung von Schwermetallsalzen die Metallionen nur schwer aus den Endprodukten entfernt werden können, und dass auch hier die Reaktionen sehr unspezifisch verlaufen, so dass keine maßgeschneiderten Produkte zugänglich sind.

Eine weitere Initiierungsart besteht in der Einführung thermisch spaltbarer Gruppen in das Stärkemolekül. Sie beruht darauf, dass das Stärkemolekül zunächst in einer vorgelagerten chemischen Reaktion mit einer niedermolekularen Verbindung umgesetzt wird, die eine thermisch spaltbare Gruppe enthält. Zu den thermisch spaltbaren Gruppen gehören die Peroxy- und die Azogruppe. In der DE 3430676 A1 und in der EP 0173517 A2 wird die Herstellung Azogruppen enthaltender Stärke beschrieben. Die Herstellung erfolgt durch Umsetzung von Stärke mit dem Disäurechlorid einer Azodicarbonsäure. Diese Methode hat jedoch den Nachteil, dass die Umsetzung nicht vollständig erfolgt. Dadurch werden bei thermischer Aktivierung auch niedermolekulare Initiatorradikale gebildet, die zur Bildung von Homopolymer führen.

Eine zweite Variante besteht in der Erzeugung von Aldehyd- oder Ketogruppen in der Stärke, die in einer aufwendigen Folge von drei polymeranalogen Umsetzungen zu einer Azoverbindung der Stärke führt, bei der zwei Anhydroglucoseeinheiten über eine Azobiscyanogruppe verknüpft sind. Von besonderem Nachteil ist hier, dass bei thermischer Aktivierung die gebildeten Radikale sehr leicht rekombinieren und damit zur Bildung vergelter Anteile führen.

Ausgehend hiervon und den damit verbundenen Nachteilen des Standes der Technik ist es Aufgabe der vorliegenden Erfindung, ein Verfahren zu entwickeln, das die Herstellung von Pfropfcopolymeren erlaubt, die frei von Homopolymeren und auf ein breites Spektrum unterschiedlicher Vinylmonomeren anwendbar ist.

Diese Aufgabe wird durch das Verfahren mit den Merkmalen des Anspruchs 1 gelöst. Weiter wird die Aufgabe durch die Tert-Alkylazocyanocarbonsäureester mit den Merkmalen des Anspruchs 10 und die Pfropfcopolymere mit den Merkmalen des Anspruchs 14 gelöst. Anspruch 26 betrifft eine Dispersion der Pfropfcopolymere und Anspruch 27 die Verwendung der erfindungsgemäßen Pfropfcopolymere. Die weiteren abhängigen Ansprüche zeigen vorteilhafte Weiterbildungen auf.

Erfindungsgemäß wird ein Verfahren zur Herstellung von Pfropfcopolymeren mit einem aus Stärke und/oder deren Derivaten gebildeten Rückgrat ausgehend von Amylose der allgemeinen Formel I 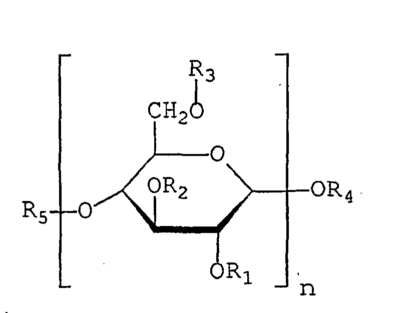 und/oder dem sich daraus ableitenden Amylopektin. Hierbei bedeuten R₁ bis R₅ unabhängig voneinander H, SO₃Na, PO(ONa)₂, NO₂, C(S)-SNa, Alkyl oder Acyl mit 1-20 C-Atomen oder Aryl, die kationisch, anionisch, hydrophob und/oder amphiphil substituiert sein können. Die Gruppe R₃ kann auch so gewählt werden, daß hierüber eine Verknüpfung zu weiteren Glucoseeinheiten unter Bildung eines Amylopektins erfolgt. Hierbei handelt es sich um die klassische 1,6-Bindung die nach durchschnittlich 25 Glucose-Bausteinen zu dem astähnlichen Amylopektin führt. Die Anzahl der Struktureinheiten n kann zwischen 300 und 60.000 liegen. Das Verfahren erfolgt nun über folgende Schritte:
a) Umsetzung der Stärke mit der beschriebenen Struktur in Gegenwart eines Säureakzeptors mit einem tert-Alkylazocyanocarbonsäurederivat mit der allgemeinen Formel II 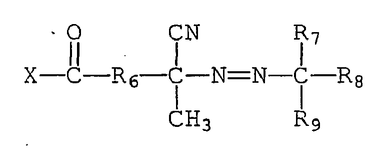 Hierbei kann R₆ eine Alkyl- oder Carboxyalkylgruppe mit 1-20 C-Atomen darstellen. R₇, R₈ und R₉ sind unabhängig voneinander Alkylgruppen, geradkettig oder verzweigt, mit 1-6 C-Atomen oder eine Phenylgruppe. Die Gruppe X in der allgemeinen Formel II kann sowohl ein Halogen als auch eine ein Anhydrid bildende Gruppe ROO- darstellen, wobei der Rest R eine beliebige Alkyl-, Aryl- oder Arylalkylgruppe darstellen kann.
b) Im folgenden Schritt erfolgt dann der Zusatz von mindestens einem Vinylmonomer.
c) Abschließend erfolgt die Initiierung der Polymerisation durch Bildung von Stärkeradikalen über eine thermische Aktivierung bei Temperaturen zwischen 25 und 120 °C. Dabei kommt es zu einer Abspaltung von Stickstoff. Es bilden sich dabei zwei Radikale, ein reaktives Makroradikal, das die radikalische Polymerisation der Vinylmonomere auslöst und ein nichtreaktives tert-Alkylradikal, das bei der Polymerisation inaktiv ist.

Als Ausgangsverbindung können für das erfindungsgemäße Verfahren sowohl Stärke als auch deren Derivate verwendet werden. Zu den Derivaten zählen sowohl physikalisch wie auch chemisch modifizierte Derivate. Zu den chemisch modifizierten zählen beispielsweise hydrolysierte, ionische, hydrophobe oder auch amphiphile Derivate.

Das Verfahren kann in unterschiedlichen Medien durchgeführt werden. In einer ersten Variante kann die Umsetzung des tert-Alkylazocyanocarbonsäurederivats in einem wäßrigen oder organischen Lösungsmittel durchgeführt werden, wobei die Stärke in gelöster Form vorliegt.

Eine weitere Alternative stellt die Umsetzung in a) als Festphasenreaktion dar. Hierbei kann auf den Einsatz eines Lösungsmittels vollständig verzichtet werden, lediglich eine intensive Durchmischung der Reaktionspartner ist notwendig.

Als dritte Variante kann die Umsetzung in a) auch in einer wäßrigen Suspension durchgeführt werden. Die Umsetzung erfolgt dann an den in der Suspension vorliegenden Stärkepartikeln.

Bevorzugt werden in Schritt a) tert-Alkylazocyanocarbonsäurechlorid oder auch ein gemischtes Anhydrid von tert-Alkylazocyanocarbonsäure mit einer weiteren Säure, besonders bevorzugt Bernsteinsäure, eingesetzt.

In einer vorzugsweisen Ausführung werden in Schritt b) des Verfahrens zumindest teilweise wasserlösliche Vinylmonomere eingesetzt. Diese können sowohl ionisch, anionisch, amphoter oder neutral sein. Ebenso ist es möglich, Mischungen aus Vinylmonomeren mit diesen Eigenschaften einzusetzen.

Als kationische Vinylmonomere kommen besonders Derivate der Acrylsäure oder Methacrylsäure in Frage. Hierzu zählen beispielsweise die quaternären Ester oder Amide dieser Säuren. Als weiteres kationisches Vinylmonomer kann Dialyldimethylammoniumchlorid eingesetzt werden.

Als anionische Vinylmonomere kommen Acrylsäure, Methacrylsäure, Vinylsulphonsäure und/oder Styrensulphonsäure vorzugsweise zum Einsatz.

Bevorzugt werden als neutrale Vinylmonomere Acrylamid, N-Vinylformamid, N-Methyl-N-Vinylacetamid, N-Vinylpyrrolidon, und/oder N-Vinylcaprolactam verwendet.

Die Vinylmonomere werden dabei vorzugsweise in einer Konzentration zwischen 0,1 und 4,0 mol/l und besonders bevorzugt .zwischen 0,7 und 1,5 mol/l eingesetzt. Die Umsetzung kann dabei sowohl in wäßrigen als auch organischen Lösungsmitteln durchgeführt werden.

Erfindungsgemäß werden ebenso tert-Alkylazocyanocarbonsäureester von Stärke und/oder deren Derivaten ausgehend von Amylose der allgemeinen Formel III 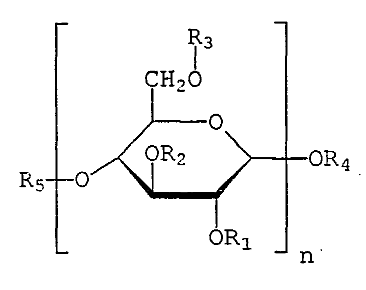 und/oder dem sich daraus ableitenden Amylopektin bereitgestellt. Hierbei können R₁ bis R₅ unabhängig voneinander ausgewählt sein aus der Gruppe H, SO₃Na PO(ONa)₂, NO₂, C(S)-SNa, Alkyl oder als Acyl mit 1-20 C-Atomen, die kationisch, anionisch, hydrophob und/oder amphiphil substitutiert sein können. Die Gruppe R₃ kann auch so gewählt werden, daß hierüber eine Verknüpfung zu weiteren Glucoseeinheiten unter Bildung eines Amylopektins erfolgt. Hierbei handelt es sich um die klassische 1,6-Bindung die nach durchschnittlich 25 Glucose-Bausteinen zu dem astähnlichen Amylopektin führt. Im gesamten Amylose- und/oder Amylopektin-Molekül ist mindestens eine der Reste R₁ bis R₅ als Gruppe mit der allgemeinen Formel IV 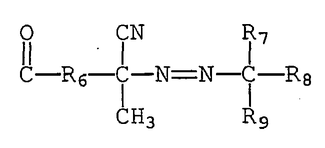 vorhanden. Hierbei stellt R₆ eine Alkyl- oder Carboxyalkylgruppe mit 1-20 C-Atomen dar, die sowohl durch Heteroatome unterbrochen als auch substitutiert sein kann. R₇, R₈ und R₉ sind unabhängig voneinander eine Alkylgruppe, die geradkettig oder verzweigt sein kann, mit 1-6 C-Atomen oder eine Phenylgruppe. Die Anzahl der Struktureinheiten n kann zwischen 300 und 60.000 liegen.

Bevorzugt können die Reste R₁ bis R₅ unabhängig voneinander ausgewählt sein aus der Gruppe (Alkyl)aminoalkyl, Ammoniumalkyl, Carboxyalkyl, Alkyl, Aryl, Arylalkyl und Hydroxyalkyl.

Die Molmasse des tert-Alkylazocyanocarbonsäureesters liegt bevorzugt zwischen 5000 und 10000000 g/mol und besonders bevorzugt zwischen 10000 und 5000000 g/mol.

Vorzugsweise kann der Substitutionsgrad (DS-Wert) der Reste R₁ bis R₅ zwischen 0,00 und 0,9 liegen. Der Substitutionsgrad der tert-Alkylazocyanocarbonsäuregruppe der allgemeinen Formel IV kann bevorzugt zwischen 0,01 und 0,9 liegen, wobei in beiden Fällen der Substitutionsgrad über die Verfahrensparameter gezielt eingestellt werden kann.

Erfindungsgemäß werden ebenso Pfropfcopolymere von Stärke und/oder deren Derivaten ausgehend von Amylose der allgemeinen Formel III 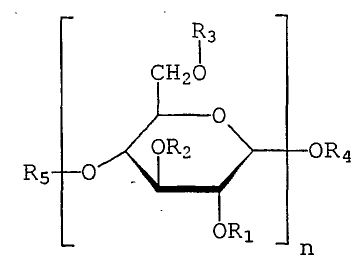 und/oder dem sich daraus ableitenden Amylopektin bereitgestellt, die nach dem erfindungsgemäßen Verfahren herstellbar sind. R₁ bis R₅ sind dabei unabhängig voneinander ausgewählt aus der Gruppe H, SO₃Na PO(ONa)₂, NO₂, C(S)-SNa, Alkyl oder Acyl mit 1-20 C-Atomen, die kationisch, anionisch, hydrophob und/oder amphiphil substituiert sein können. Die Gruppe R₃ kann auch so gewählt werden, daß hierüber eine Verknüpfung zu weiteren Glucoseeinheiten unter Bildung eines Amylopektins erfolgt. Hierbei handelt es sich um die klassische 1,6-Bindung die nach durchschnittlich 25 Glucose-Bausteinen zu dem astähnlichen Amylopektin führt. Mindestens einer dieser Reste im gesamten Amylose- und/oder Amylopektin-Molekül ist dabei eine Gruppe der allgemeinen Formel V

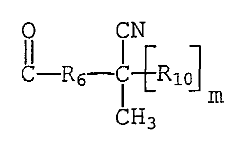

Hierbei ist R₆ eine Alkyl- oder Carboxyalkylgruppe mit 1-20 C-Atomen, die sowohl durch Heteroatome unterbrochen als auch substituiert sein können. R₁₀ stellt ein Vinylmonomer dar, wobei die Wiederholrate n zwischen 10 und 10000 liegt.

Bevorzugt sind die Reste R₁ bis R₅ unabhängig voneinander ausgewählt aus der Gruppe (Alkyl)aminoalkyl, Ammoniumalkyl, Carboxyalkyl, Alkyl, Aryl, Arylalkyl, Hydroxyalkyl, -CO-R und -CO-NHR, wobei R ausgewählt ist aus der Gruppe Alkyl, Aryl und Arylalkyl.

Die Molmasse der Stärke-Rückgratkette liegt bevorzugt zwischen 5000 und 10000000 g/mol und besonders bevorzugt zwischen 10000 und 50000 g/mol.

Die Reste R₁ bis R₅ können einen Substitutitonsgrad zwischen 0,00 und 0,9 auf, wobei dieser durch die Verfahrensparameter gezielt eingestellt werden kann. Der Substitutionsgrad (DS-Wert) der tert-Alkylazocyanocarbonsäuregruppe kann ebenso gezielt eingestellt werden und liegt zwischen 0,01 und 0,9.

Die Polymerisation kann auch mit weitgehend oder vollständig wasserunlöslichen Monomeren in Wasser als Trägerphase durchgeführt werden. Dabei wird das Monomer in Gegenwart des tert-Acylazocyanocarbonsäureesters zunächst in üblicherweise fein verteilt. Anschließend erfolgt durch thermische Aktivierung die Initiierung der Polymerisation, wobei Temperaturen zwischen 30 und 90 °C bevorzugt sind. Ohne weiteren Zusatz eines Emulgators werden stabile Dispersionen des polymerisierten Vinylmonomers erhalten. Dabei läßt sich die Teilchengröße durch Wahl der Konzentration der Reaktionspartner im Bereich zwischen 80 und 800 nm, bevorzugt zwischen 100 und 300 nm einstellen. Diese gezielte Einstellung der Teilchengröße kann alternativ durch Zusatz geringer Mengen eines üblichen Emulgators unterstützt werden. Als Vinylmonomere kann hierbei ein breites Spektrum ungesättigter Verbindungen einzeln oder in Kombination eingesetzt werden. Hierzu zählen bevorzugt Styrol, Methylstyrol und Butadien. Ebenso können Acrylate verwendet werden.

Die Pfropfcopolymere haben in vielen Anwendungsbereichen deutlich verbesserte Anwendungseigenschaften. Pfropfcopolymere, die mit kationischen Vinylmonmeren hergestellt werden, sind hervorragende Flockungsmittel bei der Abtrennung von suspendierten Feststoffen und wäßrigen Systemen. Bei gleicher Einsatzmenge werden in kürzeren Zeiten erheblich verbesserte Abscheidung, gemessen am Beispiel der Resttrübung, erreicht als bei der Verwendung konventioneller kationischer Stärken.

### Beispiel 1:

5,0 g Trockensubstanz an Wachsmaisstärkehydrolysat St⁹⁰⁰ (M_{AGE}=162,1 g/mol; 30 mmol, M_{W}=900000 g/mol) werden in 100 ml Dimethylacetamid (DMA) aufgelöst und auf ca 170°C erhitzt, um 30 ml an DMA unter N₂-Strom abzudestillieren.

Die Lösung lässt man auf Raumtemperatur abkühlen und füllt sie in einen 150 ml Doppelmantelreaktor um. Unter Rühren gibt man ein Gemisch aus 3,64 g Triethylamin (M=101,2 g/mol, 0,036 mol) und 10 ml DMA dazu.

Danach wird die Lösung auf 8°C abgekühlt und langsam 1,20 g 4-tert.-Butylazo-4-cyanovaleriansäurechlorid t-BACVSC (M=229,7 g/mol; 5,2 mmol) in 10 ml DMA zugetropft.

Die Reaktionsmischung wird 24 h bei 8°C gerührt. Anschließend wird das Stärkederivat in 1 1 Methanol gefällt, dieses wiederum in Wasser aufgenommen und mehrere Tage bei 4°C dialysiert. Aus der Gefriertrocknung werden Stärkeester mit einem DS von 0,05 erhalten.

Durch Variation der Versuchsbedingungen kann der DS gezielt eingestellt werden (Tabelle 1).

**Tabelle 1:**

| **Nr.** | **t-SACVSC** | **TEA** | **St⁹⁰⁰** | **DS** |
|---|---|---|---|---|
| 1 | 0,040 mol | 0,070 mol | 0,030 mol | 0,72 |
| 2 | 0,010 mol | 0,100 mol | 0,030 mol | 0,05 |
| 3 | 0,010 mol | 0,070 mol | 0,060 mol | 0,04 |
| 4 | 0,025 mol | 0,085 mol | 0,030 mol | 0,14 |
| 5 | 0,025 mol | 0,070 mol | 0,045 mol | 0,13 |
| 6 | 0,010 mol | 0,085 mol | 0,045 mol | 0,04 |
| 7 | 0,020 mol | 0,080 mol | 0,040 mol | 0,10 |
| 8 | 0, 030 mol | 0,075 mol | 0,035 mol | 0, 60 |
| 9 | 0,015 mol | 0,090 mol | 0,035 mol | 0, 07 |
| 10 | 0, 005 mol | 0,036 mol | 0,031 mol | 0, 05 |

### Beispiel 2:

5,27 g Trockensubstanz an Trimethylammoniumpropylstärkeether St⁺ (M_{AGE}=175,7 g/mol; 30 mmol, DS 0,1, M_{W}=700000 g/mol) werden in 100 ml Dimethylacetamid (DMA) aufgelöst und auf ca 170°C erhitzt, um 30 ml an DMA unter N₂-Strom abzudestillieren.

Die Lösung lässt man auf Raumtemperatur abkühlen, filtriert die Gelpartikel ab und füllt sie in einen 150 ml Doppelmantelreaktor um. Unter Rühren gibt man ein Gemisch aus 3,64 g Triethylamin (M=101,2 g/mol, 0,036 mol) und 10 ml DMA dazu.

Danach wird die Lösung auf 8°C abgekühlt und langsam 1,20 g 4-tert.-Butylazo-4-cyanovaleriansäurechlorid t-BACVSC (M=229,7 g/mol; 5,2 mmol) in 10 ml DMA zugetropft.

Die Reaktionsmischung wird 24 h bei 8°C gerührt. Anschließend wird das Stärkederivat direkt in einen Dialyseschlauch eingefüllt und mehrere Tage gegen Wasser bei 4°C dialysiert. Aus der Gefriertrocknung werden Stärkeester mit einem DS von 0,05 erhalten.

### Beispiel 3:

60,0 g TS an Benzylstärke (M=173,7 g/mol, 0,35 mol , DS 0,1, M_{W}~10000 g/mol) und 0,50 g Dimethylbenzyltridecylammoniumchlorid werden in 400 ml H₂O bei Raumtemperatur suspendiert und mit 1N NaOH auf pH 8 eingestellt. Anschließend wird portionsweise 43,4 g t-Butylazocyano-propylbernsteinsäureanhydrid (M=251 g/mol, 0,173 mol) unter Rühren bei konstantem pH-Wert von 8 suspendiert. Die pH-Regulierung erfolgt durch kontinuierliche Zudosierung von Natronlauge. Nach 24 h Reaktionszeit werden die gelartigen, wasserunlöslichen Anteile abzentrifugiert und die überstehende Lösung gegen Wasser dialysiert. Durch Gefriertrocknung erhält man einen Benzylstärkehalbester der t-Butylazocyanopropylbernsteinsäure mit DS = 0,05.

### Beispiel 4:

5,00 g getrocknetes Wachsmaisstärkehydrolysat St³⁰⁰ (M_{AGE}=162,1 g/mol; 31 mmol, M_{W}=300000 g/mol), 3,64 g Triethylamin (M=101,2 g/mol) und 1,20 g 4-tert.-Butylazo-4-cyanovaleriansäurechlorid (M=229,7 g/mol; 5,22 mmol) werden in 30 ml getrocknetem Dietylether unter Rühren aufgeschlämmt. Unter kontinuierlichem Rühren wird der Ether bei 30°C im leichten Vakuum (200 mbar) abgezogen. Der Rückstand wird bei 4°C für 14 Tage gelagert. Anschließend wird der Rückstand mit Wasser aufgenommen und mehrere Tage bei 4°C dialysiert. Aus der Gefriertrocknung werden Stärkeester mit einem DS von 0,01 erhalten.

Die Homogenisierung der Reaktionsmischung kann unter Einsatz eines thermostatisierbaren Kneters auch ohne Verwendung von Ether erfolgen.

### Beispiel 5:

7,56 g einer 75 %igen wässrigen Lösung von Methacryloyloxyethyldimethylbenzylammoniumchlorid MADAM-BQ (M=283,4 g/mol) und 3,44 g 4-tert.-Butylazo-4-cyanovalerian-säureester eines Wachsmaisstärkehydrolysates t-BACVS-St⁶³⁷ (M_{W}=637000 g/mol) (M=171,8 g/mol) werden mit dest. Wasser auf 200 ml aufgefüllt. Die Lösung wird in einen thermostatierbaren, innentemperaturgeregelten Doppelmantelreaktor mit Ankerrührer, Rückflußkühler, Temperaturfühler (Pt 100) und Gaseinleitungsrohr gefüllt. Danach wird die Apparatur unter ständigem Rühren mit einem geringen Argonstrom bei 10°C mehrere Stunden durchspült. Anschließend wird die Reaktionsmischung auf 70°C unter Rühren erwärmt. Nach 180 min wird die Lösung mit 100 ml einer kalten 1%igen wässrigen Hydrochinon-Lösung verdünnt, in Dialyseschläuche (regenerierte Cellulose 6 kD Cut-Off) eingefüllt und mehrere Tage gegen Wasser dialysiert (Leitfähigkeitskontrolle). Aus der Gefriertrocknung wird reines Pfropfcopolymer erhalten.

Es wurden die Konzentration an Monomer MADAM-BQ c_{M} und die Konzentration des Stärkeesters t-BACVS-St⁶³⁷ C_{t-BACVS-St} sowie dessen Substitutionsgrad DS (0,01 bis 0,15 wasserlöslich), wie in den folgenden Tabellen beschrieben, variiert. In den Tabellen 2,3,4 sind die erhaltenen Größen Umsatz und Massenanteil an gebundenen Poly-MADAM-BQ w angegeben. Während der Pfropfpolymerisationen wurde keine Bildung an Homopolymer P-MADAM-BQ beobachtet.

**Tabelle 2: Variation der Initiatorkonzentration C_{t-BACVS-St} (DS=0,05, C_{M}=0, 1 M)**

| **Nr.** | **C_{t-BACVS-St} [M]** | **Umsatz [%]** | **w [%]** |
|---|---|---|---|
| 1 | 0,10 | 84 | 58 |
| 2 | 0,20 | 89 | 48 |
| 3 | 0,30 | 89 | 45 |
| 4 | 0,40 | 83 | 32 |

**Tabelle 3: Variation des DS (c_{M}=0,1 M)**

| **Nr.** | **DS** | **C_{t-BACVS-St} [M]** | **Umsatz [%]** | **w [%]** |
|---|---|---|---|---|
| 5 | 0,05 | 0,20 | 89 | 48 |
| 6 | 0,10 | 0,10 | 93 | 57 |

**Tabelle 4: Variation der Monomerkonzentration c_{M} (DS=0,05, C_{t-BACVS-St}=0,25 M)**

| **Nr.** | **c_{M} [M]** | **Umsatz [%]** | **w [%]** |
|---|---|---|---|
| 7 | 0,05 | 56 | 16 |
| 8 | 0,10 | 85 | 47 |
| 9 | 0,15 | 92 | 61 |
| 10 | 0,20 | 95 | 66 |

Analoge Polymerisationen können in Dimethylacetamid als Lösungsmittel durchgeführt werden. Dadurch ist der Einsatz von höher substituierten t-BACVS-St⁶³⁷ mit DS bis 0,9 möglich.

### Beispiel 6:

Ein thermostatisierbarer, innentemperaturgeregelter Doppelmantelautoklav mit Propellerrührer, Berstscheibe, Manometer, Strombrecher, Temperaturfühler (Pt 100) und Gasbürette mit Gaseinleitungsrohr wird mit 19,2 g frisch destilliertem Styrol (M=104,15 g/mol), 16,0 g 4-tert.-Butylazo-4-cyanocarbonsäureester eines Stärkehydrolysates (DS=0,02; M_{W}=25000 g/mol) und 400 g ent-ionisiertem Wasser befüllt. Danach wird die Apparatur unter ständigem Rühren mit einem geringen Argonstrom mehrere Stunden bei 10°C durchspült. Dem Reaktor werden anschließend 12,8 g Butadien (M=54,09 g/mol) über die Gasbürette zudosiert. Die Reaktionsmischung wird auf 70°C erwärmt und unter ständigem Rühren (400 rpm) wird die Reaktorinnentemperatur über Nacht gehalten. Es resultiert eine niedrigviskose Polymerdispersion, mit einem Feststoffgehalt von FG=9,8 %. Die Aufreinigung des Latex erfolgt durch Dialyse gegen dest. Wasser. Der hydrodynamische Durchmesser der Styrol/Butadien-Partikel kann durch dynamische Lichtstreuung ermittelt werden, er beträgt 190 nm. Nach NMR-Analyse setzen sich die Partikelkerne aus Styrol/Butadien im Verhältnis 1:1 zusammen.

### Beispiel 7:

Ein thermostatisierbarer, innentemperaturgeregelter Doppelmantelreaktor mit Ankerrührer, Rückflußkühler, Temperaturfühler (Pt 100) und Gaseinleitungsrohr wird mit 4 g destilliertem Styrol, 20 mg SDS (Natriumdodecylsulfat) und 40 g entionisiertem Wasser befüllt. Danach wird die Apparatur unter ständigem Rühren mit einem geringen Argonstrom mehrere Stunden durchspült und die Reaktionsmischung auf 70°C erwärmt. Dem Reaktor werden anschließend 2 g an 4-tert.-Butylazo-4-cyanocarbonsäurestärkeester (DS=0,02; M_{W}=50000 g/mol), das in 10 g entionisiertem, sauerstofffreiem Wasser gelöst wurde, über ein Septum zugeführt. Unter ständigem Rühren (400 rpm) wird die Reaktorinnentemperatur über Nacht gehalten. Es resultiert eine niedrigviskose Polymerdispersion, mit einem Feststoffgehalt FG=10,26. Der hydrodynamische Durchmesser der Partikel kann durch dynamische Lichtstreuung ermittelt werden. Er beträgt 103 nm.

Die Aufreinigung des Latex erfolgt durch Ultrafiltration (50 nm Membran) in einer Berghofzelle (Kontrolle des Filtrates durch Absorption bei 258 nm).

### Beispiel 8:

### Untersuchungen zum Flockungsverhalten von in Wasser suspendierten Feststoffen

Einer Kaolinlösung (18g/l, 100 ml) werden in einer Glasküvette (Optische Weglänge ~ 5 cm) unter Rühren im Trübungsmessgerät 300 µl einer 0,1 %igen kationischen Stärkepfropfcopolymerlösung (3 ppm) zudosiert.

Nach 60 s wird das Rühren unterbrochen und die Sedimentation der Kaolinflocken anhand einer Trübungsmessung verfolgt. Die verbleibende Resttrübe wird bei 400 s gemessen.

Tabelle 5 enthält die Flockungsergebnisse der aus Beispiel 5 hervorgegangenen Produkte Nr. 1 bis 4.

**Tabelle 5:**

| **Nr.** | **w [%]** | **Resttrübe [%] ^{3 ppm}** |
|---|---|---|
| 1 | 58 | 13 |
| 2 | 48 | 17 |
| 3 | 45 | 24 |
| 4 | 32 | 30 |

## Patentansprüche

1. Verfahren zur Herstellung von Pfropfcopolymeren mit einem aus Stärke und/oder deren Derivaten gebildeten Rückgrat ausgehend von Amylose der allgemeinen Formel I 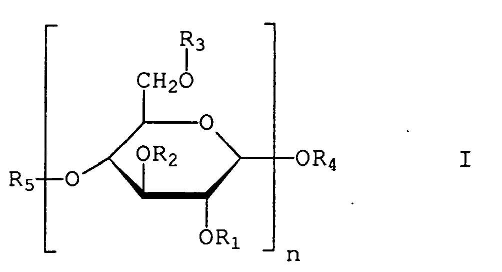 und/oder dem sich davon ableitenden Amylopektin mit
R₁ bis R₅ = unabhängig voneinander H, SO₃Na, PO(ONa)₂, NO₂, C(S)-SNa, Alkyl oder Acyl mit 1 - 20 C-Atomen oder Aryl, die kationisch, anionisch, hydrophob und/oder amphiphil substituiert sein können, wobei R₃ auch derart gewählt sein kann, dass hierüber eine Verküpfung zu weiteren Glucoseeinheiten unter Bildung eines Amylopektins erfolgt sowie n = 300 bis 60000
über folgende Schritte:
a) Umsetzung in Gegenwart eines Säureakzeptors mit einem tert-Alkylazocyanocarbonsäurederivat der allgemeinen Formel II 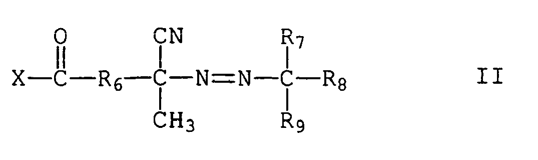 mit
R₆ = Alkyl oder Carboxyalkyl mit 1 - 20 C-Atomen,
R₇, R₈, R₉ = unabhängig voneinander Alkyl mit 1 - 5 C-Atomen oder Phenyl und
X = Halogen oder ROO- mit R = Alkyl, Aryl oder Arylalkyl.
b) Zusatz von mindestens einem Vinylmonomer,
c) Initiierung der Polymerisation durch die Bildung von Stärkeradikalen über eine thermische Aktivierung bei Temperaturen zwischen 25 und 120 °C unter N₂-Abspaltung.

2. Verfahren nach Anspruch 1,
**dadurch gekennzeichnet, dass** die Umsetzung in a) in einem wässrigen oder organischen Lösungsmittel durchgeführt wird.

3. Verfahren nach Anspruch 1,
**dadurch gekennzeichnet, dass** die Umsetzung in a) in einer wäßrigen Suspension durchgeführt wird.

4. Verfahren nach Anspruch 1,
**dadurch gekennzeichnet, dass** die Umsetzung in a) ohne Lösungsmittel als Festphasenreaktion durchgeführt wird.

5. Verfahren nach mindestens einem der Ansprüche 1 bis 3,
**dadurch gekennzeichnet, dass** als tert-Alkylazocyanocarbonsäurederivat als Chlorid oder gemischtes Anhydrid der Bernsteinsäure eingesetzt wird.

6. Verfahren nach mindestens einem der Ansprüche 1 bis 5,
**dadurch gekennzeichnet, dass** in b) zumindest teilweise wasserlösliche Vinylmonomere eingesetzt werden.

7. Verfahren nach Anspruch 6,
**dadurch gekennzeichnet, dass** das Vinylmonomer ausgewählt ist aus der Gruppe Acrylsäure, Methacrylsäure, quaternäre oder neutrale Ester oder Amide der Acrylsäure oder Methacrylsäure, Styrol, Methylstyrol, Styrensulfonsäure, Vinylsulfonsäure, Butadien, Acrylamid, N-Vinylformamid, N-Methyl-N-Vinylacetamid, N-Vinylpyrrolidon, N-Vinylcaprolactam, Diallyldimethylammoniumchlorid und deren Mischungen.

8. Verfahren nach mindestens einem der Ansprüche 1 bis 7,
**dadurch gekennzeichnet, dass** die Vinylmonomere in einer Konzentration zwischen 0,1 und 4,0 mol/l, bevorzugt zwischen 0,7 und 1,5 mol/l eingesetzt werden.

9. Verfahren nach mindestens einem der Ansprüche 1 bis 8,
**dadurch gekennzeichnet, dass** Schritt b) in einem wässrigen oder organischen Lösungsmittel durchgeführt wird.

10. tert-Alkylazocyanocarbonsäureester von Stärke und/oder deren Derivaten ausgehend von Amylose der allgemeinen Formel III 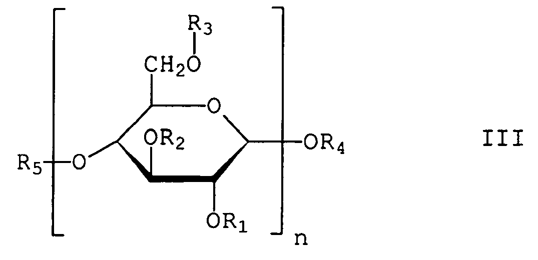 und/oder dem sich davon ableitenden Amylopektin mit
R₁ bis R₅ unabhängig voneinander H, SO₃Na, PO(ONa)₂, NO₂, C(S)-SNa, Alkyl oder Acyl mit 1 - 20 C-Atomen, die kationisch, anionisch, hydrophob und/oder amphiphil substituiert sein können, wobei R₃ auch derart gewählt sein kann, dass hierüber eine Verknüpfung zu weiteren Glucoseeinheiten unter Bildung eines Amylopektins erfolgt und mindestens ein Rest R₁ bis R₅ eine Gruppe der allgemeinen Formel IV 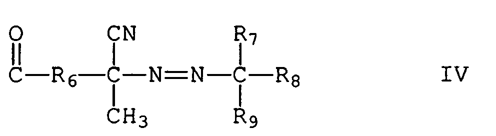 mit
R₆ = Alkyl oder Carboxyalkyl mit 1 - 20 C-Atomen, die sowohl durch Heteroatome unterbrochen als auch substituiert sein können,
R₇, R₈, R₉ = unabhängig voneinander Alkyl mit 1 - 5 C-Atomen oder Phenyl und
n = 300 bis 60000 .

11. tert-Alkylazocyanocarbonsäureester nach Anspruch 10,
**dadurch gekennzeichnet, dass** die Reste R₁ bis R₅ unabhängig voneinander ausgewählt sind aus der Gruppe (Alkyl)aminoalkyl, Ammoniumalkyl, Carboxyalkyl, Alkyl, Aryl, Arylalkyl und Hydroxyalkyl.

12. tert-Alkylazocyanocarbonsäureester nach mindestens einem der Ansprüche 10 oder 11,
**dadurch gekennzeichnet, dass** die Molmasse des tert-Alkylazocyanocarbonsäureesters zwischen 5000 und 10000000 g/mol, bevorzugt zwischen 10000 und 5000000 g/mol liegt.

13. tert-Alkylazocyanocarbonsäureester nach mindestens einem der Ansprüche 10 bis 12,
**dadurch gekennzeichnet, dass** der DS-Wert der Reste R₁ bis R₅ zwischen 0,00 und 0,9 und der DS-Wert der Gruppe der allgemeinen Formel IV zwischen 0,01 und 0,9 liegt.

14. Pfropfcopolymere mit einem aus Stärke und/oder deren Derivaten gebildeten Rückgrat der allgemeinen Formel I 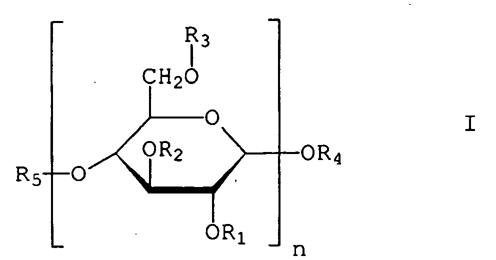 und/oder dem sich davon ableitenden Amylopektin mit
R₁ bis R₅ = unabhängig voneinander H, SO₃Na, PO(ONa)₂, C (S) -SNa, Alkyl oder Acyl mit 1 - 20 C-Atomen, die kationisch, anionisch, hydrophob und/oder amphiphil substituiert sein können, wobei R₃ auch derart gewählt sein kann, dass hierüber eine Verküpfung zu weiteren Glucoseeinheiten unter Bildung eines Amylopektins erfolgt, sowie n = 300 bis 60000 und mindestens einem Rest R₁ bis R₅ der allgemeinen Formel V 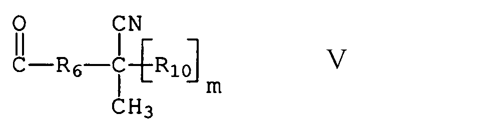 mit
R₆ = Alkyl oder Carboxyalkyl mit 1 - 20 C-Atomen, die sowohl durch Heteroatome unterbrochen als auch substituiert sein können,
R₁₀ ein Vinylmonomer mit m = 10 - 10000,
herstellbar über folgende Schritte:
a) Umsetzung der Amylose nach Formel I in Gegenwart eines Säureakzeptors mit einem tert-Alkylazocyanocarbonsäurederivat der allgemeinen Formel II 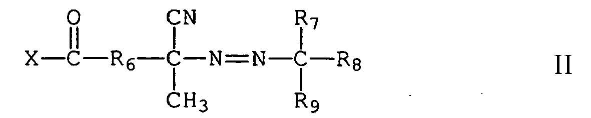 mit
R₆ = Alkyl oder Carboxyalkyl mit 1 - 20 C-Atomen,
R₇, R₈, R₉ = unabhängig voneinander Alkyl mit 1 - 5 C-Atomen oder Phenyl und
X = Halogen oder ROO- mit R = Alkyl, Aryl oder Arylalkyl;
b) Zusatz von mindestens einem Vinylmonomer, in einer Konzentration von 0,1 bis 4,0 mol/l;
c) Initiierung der Polymerisation durch die Bildung von Stärkeradikalen über eine thermische Aktivierung bei Temperaturen zwischen 25 und 120 °C unter N₂-Abspaltung.

15. Pfropfcopolymer nach Anspruch 14,
**dadurch gekennzeichnet, dass** die Reste R₁ bis R₅ unabhängig voneinander ausgewählt sind aus der Gruppe (Alkyl)aminoalkyl, Ammoniumalkyl, Carboxyalkyl, Arylalkyl, Hydroxyalkyl, -CO-R und -CO-NHR mit R = Alkyl, Aryl, Arylalkyl.

16. Pfropfcopolymer nach mindestens einem der Ansprüche 14 oder 15,
**dadurch gekennzeichnet, dass** die Molmasse der Stärkerückgratkette zwischen 5000 und 10000000 g/mol, bevorzugt zwischen 10000 und 5000000 g/mol liegt.

17. Pfropfcopolymer nach mindestens einem der Ansprüche 14 bis 16,
**dadurch gekennzeichnet, dass** der DS-Wert der Reste R₁ bis R₅ zwischen 0,00 und 0,9 und der DS-Wert des Pfropfcopolymers zwischen 0,01 und 0,9 liegt.

18. Pfropfcopolymer nach mindestens einem der Ansprüche 14 bis 17,
**dadurch gekennzeichnet, dass** die Umsetzung in a) in einem wässrigen oder organischen Lösungsmittel durchgeführt worden ist.

19. Pfropfcopolymer nach mindestens einem der Ansprüche 14 bis 18,
**dadurch gekennzeichnet, dass** die Umsetzung in a) in einer wäßrigen Suspension durchgeführt worden ist.

20. Pfropfcopolymer nach mindestens einem der Ansprüche 14 bis 19,
**dadurch gekennzeichnet, dass** die Umsetzung in a) ohne Lösungsmittel als Festphasenreaktion durchgeführt worden ist.

21. Pfropfcopolymer nach mindestens einem der Ansprüche 14 bis 20,
**dadurch gekennzeichnet, dass** das tert-Alkylazocyanocarbonsäurederivat als Chlorid oder gemischtes Anhydrid der Bernsteinsäure eingesetzt worden ist.

22. Pfropfcopolymer nach mindestens einem der Ansprüche 14 bis 21,
**dadurch gekennzeichnet, dass** in b) zumindest teilweise wasserlösliche Vinylmonomere eingesetzt worden sind.

23. Pfropfcopolymer nach mindestens einem der Ansprüche 14 bis 22,
**dadurch gekennzeichnet, dass** das Vinylmonomer ausgewählt ist aus der Gruppe Acrylsäure, Methacrylsäure, quaternäre oder neutrale Ester oder Amide der Acrylsäure oder Methacrylsäure, Styrol, Methylstyrol, Styrensulfonsäure, Vinylsulfonsäure, Butadien, Acrylamid, N-Vinylformamid, N-Methyl-N-Vinylacetamid, N-Vinylpyrrolidon, N-Vinylcaprolactam, Diallyldimethylammoniumchlorid und deren Mischungen.

24. Pfropfcopolymer nach mindestens einem der Ansprüche 14 bis 23,
**dadurch gekennzeichnet, dass** die Vinylmonomere in einer Konzentration zwischen 0,7 und 1,5 mol/l eingesetzt worden ist.

25. Pfropfcopolymer nach mindestens einem der Ansprüche 14 bis 24,
**dadurch gekennzeichnet, dass** Schritt b) in einem wässrigen oder organischen Lösungsmittel durchgeführt worden ist.

26. Dispersion von Pfropfcopolymeren nach mindestens einem der Ansprüche 14 bis 25,
**dadurch gekennzeichnet, dass** weitgehend oder vollständig wasserunlösliche Vinylmonomere eingesetzt werden.

27. Verwendung der Pfropfcopolymere nach mindestens einem der Ansprüche 14 bis 25 als Flockungsmittel.

## Claims

1. Method for the production of graft copolymers with a backbone formed from starch and/or derivatives thereof working from amylose with the general formula I 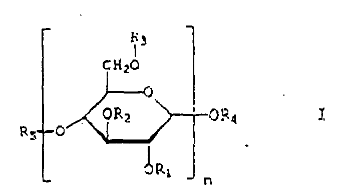 and/or the amylopectin derived therefrom
wherein
R₁ to R₅ = independently of one another, H, SO₃Na, PO(ONa)₂, NO₂, C(S) - SNa, alkyl or acyl with 1 - 20 C-atoms or aryl, which can be substituted by cationic, anionic, hydrophobic and/or amphiphilic means, wherein R₃ can also be selected in such a way that a linkage to further glucose units occurs by this means forming an amylopectin and also
n = 300 to 60000
by means of the following steps:
a) conversion in the presence of an acid acceptor with a tert-alkylazocyano carboxylic acid derivative with the general formula II 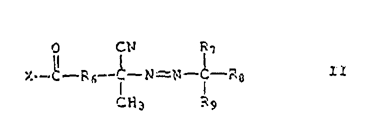 wherein
R₆ = alkyl or carboxy alkyl with 1 - 20 C-atoms,
R₇, R₈, R₉ = independently of one another, alkyl with 1 - 5 C-atoms or phenyl and
X = halogen or ROO- where R = alkyl, aryl or arylalkyl.
b) addition of at least one vinyl monomer,
c) initiation of polymerisation by the formation of starch radicals by means of a thermal activation at temperatures between 25° and 120°C splitting off N₂.

2. Method according to Claim 1, **characterised in that** the conversion in a) is conducted in an aqueous or organic solvent.

3. Method according to Claim 1, **characterised in that** the conversion in a) is conducted in an aqueous suspension.

4. Method according to Claim 1, **characterised in that** the conversion in a) is conducted as a solid phase reaction without solvent.

5. Method according to at least one of Claims 1 to 3, **characterised in that** the tert-alkylazocyano carboxylic acid derivative is used as chloride or mixed anhydride of succinic acid.

6. Method according to at least one of Claims 1 to 5, **characterised in that** at least partially water-soluble vinyl monomers arc used in b).

7. Method according to Claim 6, **characterised in that** the vinyl monomer is selected from the group: acrylic acid, methacrylic acid, quaternary or neutral esters or amides of acrylic acid or methacrylic acid, styrene, methyl styrene, styrene sulphonic acid, vinyl sulphonic acid, butadiene, acrylamide, N-vinyl formamide, N-methyl-N-vinyl acetamide, N-vinyl pyrrolidone, N-vinyl caprolactam, diallyl dimethyl ammonium chloride and mixtures thereof.

8. Method according to at least one of Claims 1 to 7, **characterised in that** the vinyl monomers are used in a concentration of between 0.1 and 4.0 mol/l, preferably between 0.7 and 1.5 mol/l.

9. Method according to at least one of Claims 1 to 8, **characterised in that** step b) is conducted in an aqueous or organic solvent.

10. Tert-alkylazocyano carboxylic acid esters of starch and/or derivatives thereof working from amylose with the general formula III 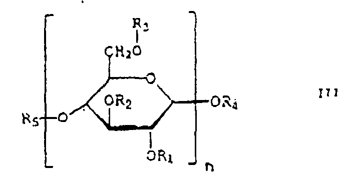 and/or the amylopectin derived therefrom
wherein
R₁ to R₅ = independently of one another, H, SO₃Na, PO(ONa)₂, NO₂, C(S) - SNa, alkyl or acyl with 1 - 20 C-atoms, which can be substituted by cationic, anionic, hydrophobic and/or amphiphilic means, wherein R₃ can also be selected in such a way that a linkage to further glucose units occurs by this means forming an amylopectin and at least one residue R₁ to R₅ [as?] a group with the general formula IV 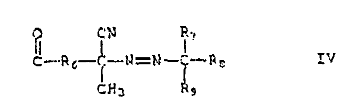 wherein
R₆ = alkyl or carboxy alkyl with 1 - 20 C-atoms, which can be interrupted and also substituted by heteroatoms
R₇, R₈, R₉ = independently of one another, alkyl with 1 - 5 C-atoms or phenyl and
n = 300 to 60000.

11. Tert-alkylazocyano carboxylic acid ester according to Claim 10, **characterised in that** residues R₁ to R₅ are selected independently of one another from the group: (alkyl) amino alkyl, ammonium alkyl, carboxy alkyl, alkyl, aryl, arylalkyl and hydroxy alkyl.

12. Tert-alkylazocyano carboxylic acid ester according to at least one of Claims 10 or 11, **characterised in that** the molar mass of the tert-alkylazocyano carboxylic acid ester lies between 5000 and 10000000 g/mol, preferably between 10000 and 5000000 g/mol.

13. Tert-alkylazocyano carboxylic acid ester according to at least one of Claims 10 to 12, **characterised in that** the DS value of residues R₁ to R₅ lies between 0.00 and 0.9 and the DS value of the group with the general formula IV lies between 0.01 and 0.9.

14. Graft copolymers with a backbone formed from starch and/or derivatives thereof with the general formula I 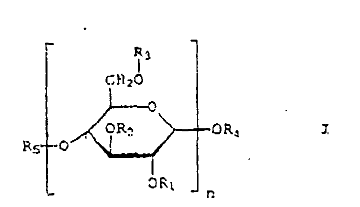 and/or the amylopectin derived therefrom
wherein
R₁ to R₅ = independently of one another, H, SO₃Na, PO(ONa)₂, C(S) -SNa, alkyl or acyl with 1 - 20 C-atoms, which can be substituted by cationic, anionic, hydrophobic and/or amphiphilic means, wherein R₃ can also be selected in such a way that a linkage to further glucose units occurs by this means forming an amylopectin, and also n = 300 to 60000, and at least one residue R₁ to R₅ with the general formula V 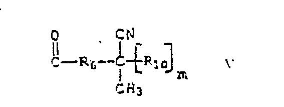 wherein
R₆ = alkyl or carboxy alkyl with 1 - 20 C-atoms, which can be interrupted and also substituted by heteroatoms,
R₁₀ is a vinyl monomer where m = 10 - 10000,
producible by means of the following steps:
a) conversion of the amylose with formula I in the presence of an acid acceptor with a tert-alkylazocyano carboxylic acid derivative with the general formula II 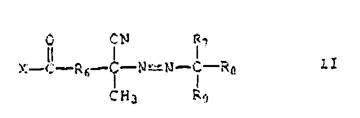 wherein
R₆ = alkyl or carboxy alkyl with 1 - 20 C-atoms,
R₇, R₈, R₉ = independently of one another, alkyl with 1 - 5 C-atoms or phenyl and
X = halogen or ROO- where R = alkyl, aryl or arylalkyl;
b) addition of at least one vinyl monomer in a concentration of 0.1 to 4.0 mol/l;
c) initiation of polymerisation by the formation of starch radicals by means of a thermal activation at temperatures between 25° and 120°C splitting off N₂.

15. Graft copolymer according to Claim 14, **characterised in that** residues R₁ to R₅ are selected independently of one another from the group: (alkyl) amino alkyl, ammonium alkyl, carboxy alkyl, arylalkyl, hydroxy alkyl, -CO-R and -CO-NHR where R = alkyl, aryl, arylalkyl.

16. Graft copolymer according to at least one of Claims 14 or 15, **characterised in that** the molar mass of the starch backbone chain lies between 5000 and 10000000 g/mol, preferably between 10000 and 5000000 g/mol.

17. Graft copolymer according to at least one of Claims 14 to 16, **characterised in that** the DS value of residues R₁ to R₅ lies between 0.00 and 0.9 and the DS value of the graft copolymer lies between 0.01 and 0.9.

18. Graft copolymer according to at least one of Claims 14 to 17, **characterised in that** the conversion in a) was conducted in an aqueous or organic solvent.

19. Graft copolymer according to at least one of Claims 14 to 18, **characterised in that** the conversion in a) was conducted in an aqueous suspension.

20. Graft copolymer according to at least one of Claims 14 to 19, **characterised in that** the conversion in a) was conducted as a solid phase reaction without solvent.

21. Graft copolymer according to at least one of Claims 14 to 20, **characterised in that** the tert-alkylazocyano carboxylic acid derivative was used as chloride or mixed anhydride of succinic acid.

22. Graft copolymer according to at least one of Claims 14 to 21, **characterised in that** at least partially water-soluble vinyl monomers were used in b).

23. Graft copolymer according to at least one of Claims 14 to 22, **characterised in that** the vinyl monomer is selected from the group: acrylic acid, methacrylic acid, quaternary or neutral esters or amides of acrylic acid or methacrylic acid, styrene, methyl styrene, styrene sulphonic acid, vinyl sulphonic acid, butadiene, acrylamide, N-vinyl formamide, N-methyl-N-vinyl acetamide, N-vinyl pyrrolidone, N-vinyl caprolactam, diallyl dimethyl ammonium chloride and mixtures thereof.

24. Craft copolymer according to at least one of Claims 14 to 23, **characterised in that** the vinyl monomers were used in a concentration of between 0.7 and 1.5 mol/l.

25. Graft copolymer according to at least one of Claims 14 to 24, **characterised in that** step b) was conducted in an aqueous or organic solvent.

26. Dispersion of graft copolymers according to at least one of Claims 14 to 25, **characterised in that** substantially or completely water-insoluble vinyl monomers were used.

27. Use of the graft copolymers according to at least one of Claims 14 to 25 as flocculants.

## Revendications

1. Procédé de production de copolymères greffés, comportant une colonne vertébrale formée d'amidon et/ou de ses dérivés, en partant d'amylose de formule générale I, 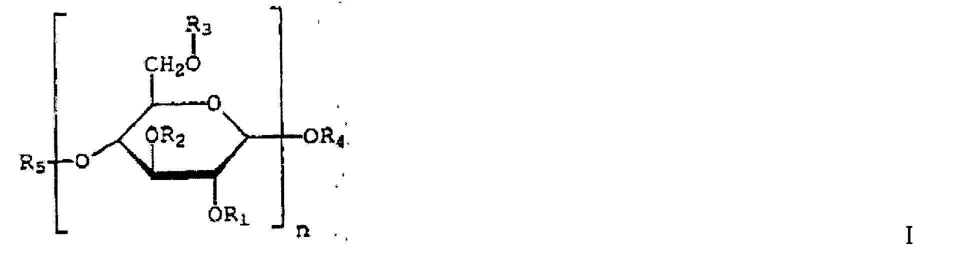 et/ou de l'amylopectine qui en dérive, avec
R₁ à R₅ = indépendamment les uns des autres H, SO₃Na PO(ONa)₂, NO₂, C(S)-SNa, alkyle ou acyle avec 1 à 20 atomes C ou aryle, qui peuvent être substitués de manière cationique, anionique, hydrophobe et/ou amphiphile, R₃ pouvant également être choisi de telle façon que, par son intermédiaire, une liaison s'effectue avec d'autres unités de glucose avec formation d'une amylopectine, ainsi que
n = 300 à 60 000,
et en passant par les étapes suivantes :
a) conversion en présence d'un accepteur d'acide à l'aide d'un dérivé d'acide tert-alkylazocyanocarboxylique selon la formule générale II, 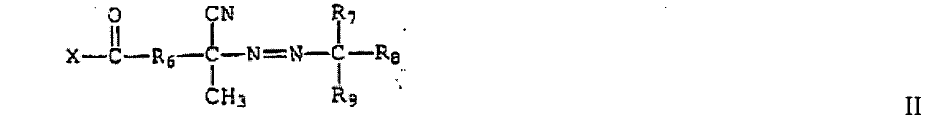 avec
R₆ = alkyle ou carboxyalkyle avec 1 à 20 atomes C,
R₇, R₈, R₉ = indépendamment les uns des autres alkyle avec 1 à 5 atomes C ou phényle, et
X = halogène ou ROO- avec R = alkyle, aryle ou arylakyle,
b) addition d'au moins un monomère de vinyle,
c) initiation de la polymérisation par la formation de radicaux d'amidon par l'intermédiaire d'une activation thermique à des températures comprises entre 25 et 120 °C avec élimination de N₂.

2. Procédé selon la revendication 1,
**caractérisé en ce que**
la conversion dans a) est effectuée dans un solvant aqueux ou organique.

3. Procédé selon la revendication 1,
**caractérisé en ce que**
la conversion dans a) est effectuée dans uns suspension aqueuse.

4. Procédé selon la revendication 1,
**caractérisé en ce que**
la conversion dans a) est effectuée sans solvant sous forme de réaction en phase solide.

5. Procédé selon au moins l'une des revendications 1 à 3,
**caractérisé en ce que**
comme dérivé d'acide tert-alkylazocyanocarboxylique, on utilise un chlorure ou un anhydride mixte de l'acide succinique.

6. Procédé selon au moins l'une des revendications 1 à 5,
**caractérisé en ce que**
dans b) on utilise au moins partiellement des monomères de vinyle solubles dans l'eau.

7. Procédé selon la revendication 6,
**caractérisé en ce que**
le monomère de vinyle est sélectionné au sein du groupe formé par les substances suivantes : acide acrylique, acide méthacrylique, esters quaternaires ou neutres ou amides de l'acide acrylique ou méthacrylique, styrol, méthylstyrol, acide styrènesulfonique, acide vinylsulfonique, butadiène, acrylamide, N-vinylformamide, N-méthyl-N-vinylacétamide, N-vinylpyrollidone, N-vinylcaprolactame, chlorure de diallyldiméthylammonium et leurs mélanges.

8. Procédé selon au moins l'une des revendications 1 à 7,
**caractérisé en ce que**
les monomères de vinyle sont utilisés dans une concentration comprise entre 0,1 et 4,0 moles/litre, et de préférence entre 0,7 et 1,5 moles/litre.

9. Procédé selon au moins l'une des revendications 1 à 8,
**caractérisé en ce que**
l'étape b) est effectuée dans un solvant aqueux ou organique.

10. Ester d'acide tert-alkylazocyanocarboxylique d'amidon et/ou des ses dérivés, obtenu en partant d'amylose selon la formule générale III, 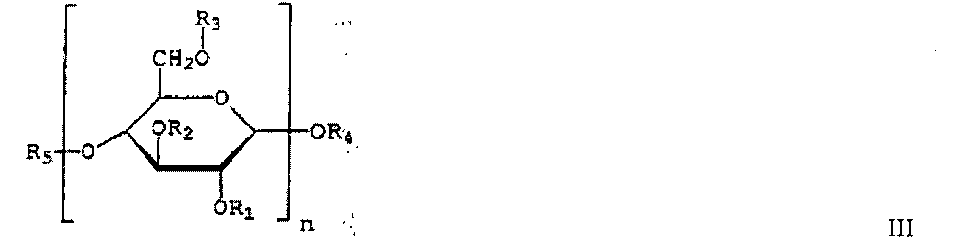 et/ou de l'amylopectine qui en dérive, avec
R₁ à R₅ = indépendamment les uns des autres H, SO₃Na, PO(ONa)₂, NO₂, C(S)-SNa, alkyle ou acyle avec 1 à 20 atomes C, qui peuvent être substitués de manière cationique, anionique, hydrophobe et/ou amphiphile, R₃ pouvant également être choisi de telle façon que, par son intermédiaire, une liaison s'effectue avec d'autres unités de glucose avec formation d'une amylopectine, et au moins un radical R₁ à R₅ formant un groupe selon la formule générale IV, 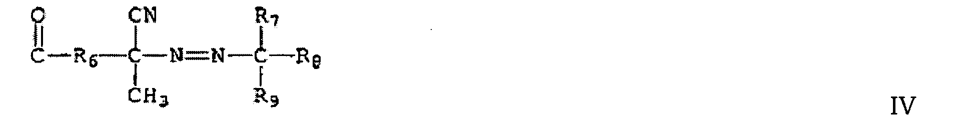 avec
R₆ = alkyle ou carboxyalkyle avec 1 à 20 atomes C, qui peuvent être soit interrompus par des hétéroatomes soit substitués,
R₇, R₈, R₉ = indépendamment les uns des autres, alkyle avec 1 à 5 atomes C ou phényle, et
n = 300 à 60 000.

11. Ester d'acide tert-alkylazocyanocarboxylique selon la revendication 10,
**caractérisé en ce que**
les radicaux R₁ à R₄ sont sélectionnés, indépendamment les un des autres, au sein du groupe formé par les substances suivantes : (alkyl)aminoalkyle, ammoniumalkyle, carboxylalkyle, alkyle, aryle, arylalkyle et hydroxyalkyle.

12. Ester d'acide tert-alkylazocyanocarboxylique selon au moins l'une des revendications 10 ou 11,
**caractérisé en ce que**
la masse molaire de l'ester d'acide tert-alkylazocyanocarboxylique se situe entre 5 000 et 10 000 000 g/mol, et de préférence entre 10 000 et 5 000 000 g/mol.

13. Ester d'acide tert-alkylazocyanocarboxylique selon au moins l'une des revendications 10 à 12,
**caractérisé en ce que**
la valeur de DS des radicaux R₁ à R₅ se situe entre 0,00 et 0,9, et la valeur de DS du groupe de formule générale IV se situe entre 0,01 et 0,9.

14. Copolymères greffés comportant une colonne vertébrale formée d'amidon et/ou de ses dérivés, selon la formule générale I, 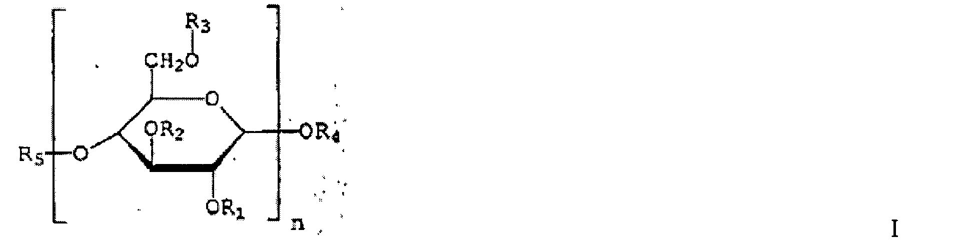 et/ou de l'amylopectine qui en dérive, avec
R₁ à R₅ = indépendamment les uns des autres H, SO₃Na PO(ONa)₂, C(S)-SNa, alkyle ou acyle avec 1 à 20 atomes C, qui peuvent être substitués de manière cationique, anionique, hydrophobe et/ou amphiphile, R₃ pouvant également être choisi de telle façon que, par son intermédiaire, une liaison s'effectue avec d'autres unités de glucose avec formation d'une amylopectine, ainsi que n = 300 à 60 000, et au moins un radical R₁ à R₅ obéissant à la formule générale V, 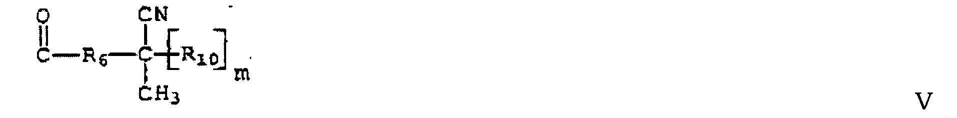 avec
R₆ = alkyle ou carboxyalkyle avec 1 à 20 atomes C, qui peuvent être soit interrompus par des hétéroatomes soit substitués,
Rio étant un polymère de vinyle avec m = 10 à 10 000,
pouvant être fabriqués en passant par les étapes suivantes :
a) conversion de l'amylose selon la formule I en présence d'un accepteur d'acide comportant une dérivé d'acide tert-alkylazocyanocarboxylique selon la formule générale II, 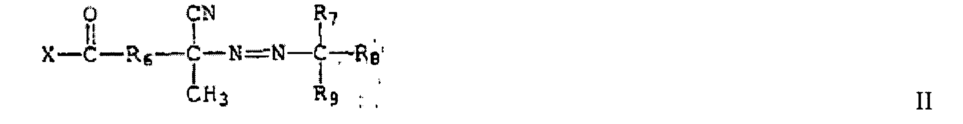 avec
R₆ = alkyle ou carboxyalkyle avec 1 à 20 atomes C,
R₇, R₈, R₉ = indépendamment les uns des autres, alkyle avec 1 à 5 atomes C ou phényle, et
X = halogène ou ROO- avec R = alkyle, aryle ou arylalkyle ;
b) addition d'au moins un monomère de vinyle, en concentration de 0,1 à 4,0 moles/litre ;
c) initiation de la polymérisation par formation de radicaux d'amidon par l'intermédiaire d'une activation thermique à des températures comprises entre 25 et 120 °C avec élimination de N₂.

15. Copolymère greffé selon la revendication 14,
**caractérisé en ce que**
les radicaux R₁ à R₅ sont sélectionnés, indépendamment les uns des autres, au sein groupe formé par les substances suivantes : (alkyl)aminoalkyle, ammoniumalkyle, carboxyalkyle, arylalkyle, hydroxyalkyle, -CO-R et -CO-NHR avec R = alkyle, aryle, arylalkyle.

16. Copolymère greffé selon au moins l'une des revendications 14 ou 15,
**caractérisé en ce que**
la masse molaire de la chaîne de colonne vertébrale d'amidon se situe entre 5 000 et 10 000 000 g/mole, et de préférence entre 10 000 et 5 000 000 g/mole.

17. Copolymère greffé selon au moins l'une des revendications 14 à 16,
**caractérisé en ce que**
la valeur de DS des radicaux R₁ à R₅ se situe entre 0,00 et 0,9, et la valeur de DS du copolymère greffé se situe entre 0,01 et 0,9.

18. Copolymère greffé selon au moins l'une des revendications 14 à 17,
**caractérisé en ce que**
la conversion en a) a été effectuée dans un solvant aqueux ou organique.

19. Copolymère greffé selon au moins l'une des revendications 14 à 18
**caractérisé en ce que**
la conversion en a) a été effectuée dans une suspension aqueuse.

20. Copolymère greffé selon au moins l'une des revendications 14 à 19,
**caractérisé en ce que**
la conversion en a) a été effectuée sans solvant sous forme de réaction en phase solide.

21. Copolymère greffé selon au moins l'une des revendications 14 à 20,
**caractérisé en ce que**
le dérivé d'acide de tert-alkylazocyanocarboxylique a été utilisé sous forme de chlorure ou d'anhydride mixte de l'acide succinique.

22. Copolymère greffé selon au moins l'une des revendications 14 à 21,
**caractérisé en ce que**
dans b) ont été utilisés au moins partiellement des monomères de vinyle solubles dans l'eau.

23. Copolymère greffé selon au moins l'une des revendications 14 à 22,
**caractérisé en ce que**
le monomère de vinyle est sélectionné au sein du groupe formé des substances suivantes : acide acrylique, acide méthacrylique, esters quaternaires ou neutres ou amides de l'acide acrylique ou méthacrylique, styrène, méthylstyrène, acide styrènesulfonique, acide vinylsulfonque, butadiène, acrylamide, N-vinylformamide, N-méthyl-N-vinylacétamide, N-vinylpyrrolidone, N-vinylcaprolactame, chlorure de diallyldiméthylammonium et leurs mélanges.

24. Copolymère greffé selon au moins l'une des revendications 14 à 23,
**caractérisé en ce que**
les monomères de vinyle ont été utilisés en une concentration comprise entre 0,7 et 1,5 moles/litre.

25. Copolymère greffé selon au moins l'une des revendications 14 à 24,
**caractérisé en ce que**
l'étape b) a été effectuée dans un solvant aqueux ou organique.

26. Dispersion de copolymères greffés selon au moins l'une des revendications 14 à 25,
**caractérisée en ce que**
l'on utilise dans une large mesure ou exclusivement des monomères de vinyle insolubles dans l'eau.

27. Utilisation des copolymères greffés selon au moins l'une des revendications 14 à 25, comme agents de floculation.
